(19) Europäisches Patentamt
European Patent Office
Office européen des brevets

(11) **EP 3 632 947 A1**

(12) **EUROPÄISCHE PATENTANMELDUNG**

(43) Veröffentlichungstag:
**08.04.2020  Patentblatt 2020/15**

(51) Int Cl.:
**C08G 18/72** (2006.01)     **C08J 9/00** (2006.01)
**C08G 18/32** (2006.01)

(21) Anmeldenummer: **18198126.7**

(22) Anmeldetag: **02.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Davepon, Björn**
**Patentanwaltskanzlei Davepon**
**Schloss Dyck**
**41363 Jüchen (DE)**

(54) **TRANSLUZENTE POLYURETHAN- ODER POLYISOCYANURATSCHAUMSTOFFE**

(57)     Die vorliegende Erfindung betrifft, ein Verfahren zur Herstellung von transluzenten Polyurethan- und Polyisocyanuratschaumstoffen durch Umsetzung einer Komponente A umfassend,

A1 mindestens ein, mit der Komponente B reaktives, Polyol;

A2 gegebenenfalls mindestens ein Amin;

A3 Wasser und gegebenenfalls Ameisensäure;

A4 mindestens einen Schaumstabilisator

A5 gegebenenfalls Hilfs- und/oder Zusatzstoffe;

A6 gegebenenfalls mindestens ein Flammschutzmittel;

A7 mindestens einen Katalysator;

und eine Komponente B, umfassend,

B1 mindestens eine aliphatische oder cycloaliphatische Polyisocyanatkomponente oder eine Kombination davon; und

B2 gegebenenfalls mindestens ein hydrophiliertes Isocyanat; und

B3 größer oder gleich 10 Gew.-Teile und bis zu 70 Gew.-Teile einer aromatischen Polyisocyanatkomponente, einer aromatischen Polyisocyanatkomponente, wobei die Gewichtsteile von B3 bezogen sind auf die Summe der Gewichtsteile von B1 bis B3, welche auf 100 Gew.-Teile normiert werden, dadurch gekennzeichnet, dass die Umsetzung der Komponente A mit der Komponente B bei einer Isocyanat-Kennzahl von wenigstens 150 durchgeführt wird, wobei die erhaltenen transluzenten Polyurethan- und Polyisocyanuratschaumstoffe eine Lichttransmission nach EN ISO 13468-2:2006 von mindestens 10% und einen Haze von mindestens 70%, bestimmt nach ASTM D1003-13, jeweils gemessen bei einer Schichtdicke von 20 mm, aufweisen. Die durch das Verfahren erhaltenen Polyurethan- und Polyisocyanuratschaumstoffe und deren Verwendung unter anderem als Bauelement, als Wandelement, als Bodenelement, in Gebäuden, in Fahrzeugen oder Lampen.

EP 3 632 947 A1

1      **EP 3 632 947 A1**      2

**Beschreibung**

Die vorliegende Erfindung betrifft transluzente, bevorzugt überwiegend geschlossenzellige und lichtechte, Polyurethan- oder Polyisocyanuratschaumstoffe, die eine hohe Lichttransmission besitzen und daher z.B. für die Herstellung von transluzenten Bauelementen geeignet sind.

Stand der Technik

Polyisocyanat-basierte Hartschaumstoffe als Zwischenschicht für Sandwichstrukturen (geformte Sandwichplatten) sowie deren Verwendung zur Herstellung von Bauelementen sind an sich bekannt. Auch transluzente Schaumstoffplatten als Wand- und Deckenplatten wurden schon beschrieben, z.B. DE 10 2005 042 235 A1. Allerdings wurde die Transluzenz nicht dadurch erreicht, dass die Schaumstoffe selbst transluzent sind, sondern dadurch, dass Lichtleitfasern eingearbeitet wurden. Die aus dem Stand der Technik bekannten Polyurethan- und Polyisocyanuratschaumstoffe sind jedoch an sich nicht transluzent.

Polyurethan- und Polyisocyanuratschaumstoffe werden üblicherweise zur Wärmedämmung eingesetzt. Transluzente Schäume mit guter Lichtdurchlässigkeit und gutem thermischen Isolationsverhalten sind als Materialien sowohl für die Bauindustrie als auch im Bereich Innenraum und Wohndesign interessant. Raumtrennende Elemente mit transluzenten aber nicht transparenten Eigenschaften, bei gleichzeitiger Dämpfung von Geräusch und Wärme, sind auf Basis von organischen witterungsstabilen und hochvernetzten Kunststoffen noch nicht beschrieben, würden aber in einer neuen Kombination verschiedene Bedürfnisse befriedigen wie Witterungsstabilität, Dämmung, Lichtdurchlässigkeit, Sichtschutz, und Farbstabilität.

Thermoplastische Multistegplatten auf Basis von Polymethylmethacrylat und Polycarbonat, die auch transparent gestaltet sein können, werden zu diesem Zweck manchmal eingesetzt. Der Prozess der Herstellung von Multistegplatten erlaubt allerdings nicht die direkte Herstellung geschlossener zellulärer Strukturen, weshalb Vergilbung, Veralgung und andere durch Feuchtigkeitsmigration verursachte Effekte nie ganz ausgeschlossen werden können. Außerdem sind hochwertige Dämmung und Sichtschutz nur bedingt vorhanden und sehr aufwendig, und zum Beispiel durch Füllen der Multistegplatten mit Silica basierten Aerogelen möglich. Auch hier ist die Wasseraufnahme und Volumenstabilität der gefüllten Komponente kritisch. Transluzente Bauelemente auf Basis von Silica-Aerogelen sind zudem in ihre Herstellung aufwändig und teuer.

Die Aufgabe der vorliegenden Erfindung bestand somit darin einen Polyurethan- und Polyisocyanuratschaumstoff mit hoher Transluzenz zur Verfügung zu stellen. Vorzugsweise sollen diese Schäume weitestgehend farblos, somit bei Bedarf einfärbbar und zudem temperaturstabil sein. Eine weitere Aufgabe der vorliegenden Erfindung bestand darin, ein effizientes Verfahren zur Herstellung von transluzenten, dämmenden Baustoffen, die die oben genannte Bedürfnisse befriedigen und oben genannte Nachteile überkommen, zur Verfügung zu stellen.

Die Aufgaben wurde gelöst durch ein Verfahren zur Herstellung von transluzenten Polyurethan- und Polyisocyanuratschaumstoffen durch Umsetzung einer Komponente A umfassend oder bestehend aus,

> A1 mindestens ein, mit der Komponente B reaktives, Polyol;

> A2 gegebenenfalls mindestens ein Amin;

> A3 Wasser und gegebenenfalls Ameisensäure;

> A4 mindestens einen Schaumstabilisator

> A5 gegebenenfalls Hilfs- und/oder Zusatzstoffe;

> A6 gegebenenfalls mindestens ein Flammschutzmittel;

> A7 mindestens einen Katalysator;

und eine Komponente B, deren Gehalt an aromatischen Polyisocyanaten wenigstens 5 Gew.-% und höchstens 70 Gew.-% beträgt, umfassend,

> B1 mindestens eine aliphatische oder cycloaliphatische Polyisocyanatkomponente oder eine Kombination davon;

> B2 gegebenenfalls mindestens ein hydrophiliertes Isocyanat; und

> B3 größer oder gleich 10 Gew.-Teile und bis zu 70 Gew.-Teile bevorzugt bis zu 50 Gew.-Teile und ganz besonders bevorzugt bis zu 40 Gew.-Teile und insbesondere bevorzugt bis zu 30 Gew.-Teile einer aromatischen Polyisocyanatkomponente, wobei die Gewichtsteile von B3 bezogen sind auf die Summe der Gewichtsteile von B1 bis B3, welche auf 100 Gew.-Teile normiert werden, dadurch gekennzeichnet, dass

die Umsetzung der Komponente A mit der Komponente B bei einer Isocyanat-Kennzahl von wenigstens 200 bevorzugt von wenigstens 250 und besonders bevorzugt von wenigstens 300 durchgeführt wird, wobei im Wesentlichen keine gasförmigen Nukleierungsmittel, eingetragen durch den Mischprozess, bei der Reaktion anwesend sind, und wobei die erhaltenen transluzenten Polyurethan- und Polyisocyanuratschaumstoffe eine Lichttransmission nach EN ISO 13468-2:2006 von mindestens 10% und einen

2

Haze von mindestens 70%, bestimmt nach ASTM D1003-13, jeweils gemessen bei einer Schichtdicke von 20 mm, aufweisen.

Überraschenderweise wurde nun gefunden, dass die erfindungsgemäßen Schäume auf Basis von Polyurethan- und Polyisocyanuratschäumen, hergestellt aus der spezifischen Zusammensetzung der vorliegenden Erfindung, eine höhere Lichttransmission besitzen, insbesondere wenn die einzelnen Komponenten bevorzugt möglichst blasenfrei vermischt werden und mit einem chemischen Treibmittel geschäumt werden. Hierbei ist bevorzugt die Inkorporation von Gasen, insbesondere von Luft zu vermeiden. Die Lichttransmission der erfindungsgemäßen Formulierungen ist tendenziell höher, wenn die Reaktionsmischung vor dem Einsatz der Treibreaktion bevorzugt eine möglichst geringe Trübung nach DIN EN ISO 7027 aufweist. Da die Trübung maßgeblich durch Streuung des Lichtes an Mikrobläschen verursacht wird, kann diese als Maß für die durch eingemischte Luft / Gas gebildeten Mikrobläschen herangezogen werden.

Werden in einer bevorzugten Ausführungsform die Komponenten auf diese Art vermischt, dann haben die erfindungsgemäßen Schäume auf Basis von Polyurethan- und Polyisocyanuratschäumen eine besonders hohe Lichttransmission von mindestens 10% bei 20 mm Dicke gemessen kombiniert mit guten Dämmeigenschaften, nämlich einer Wärmeleitfähigkeit, bevorzugt von kleiner als 100 mW/(m*K). Neben der guten Transluzenz und guten Dämmeigenschaften zeigen die erfindungsgemäßen Schäume überdies eine sehr gute thermische Beständigkeit bzw. eine gute Flammwidrigkeit, welche für den Einsatz beispielsweise im Baubereich vorteilhaft ist.

Unter einem transluzenten Schaumstoff wird ein solcher verstanden, der im Bereich von 400 nm bis 800 nm eine Lichttransmission von mindestens 10%, bestimmt nach EN ISO 13468-2:2006 bei einer Dicke von 20 mm, bevorzugt wenigstens 20%, aufweist. Der erhaltene Schaumstoff weist zudem einen Haze (= 100*Transmission diffus / Transmission gesamt) von mindestens 70%, bestimmt nach ASTM D1003-13 bei einer Schichtdicke von 20 mm, vorzugsweise von mindestens 90%, stärker bevorzugt von mindestens 95%, am stärksten bevorzugt von mindestens 99% auf.

Unter einem Polyurethan- bzw. Polyisocyanuratschaumstoff wird ein Schaumstoff verstanden, bei dem die Aushärtung der flüssigen Ausgangsformulierung, enthaltend Isocyanate und Polyole mit einer Kennzahl ≥150, bevorzugt ≥200, besonders bevorzugt ≥300 zu einem vernetzten Polymer in Schaumform führt. Die Reaktion verläuft bevorzugt zu einem großen Teil über eine Trimerisierungsreaktion der Isocyanatfunktion, wobei überwiegend Polyisocyanurate entstehen.

Die Kennzahl gibt NCO-reaktiven Äquivalente im Verhältnis zu den aktiven H-Funktionen, meist OH- oder NH-Äquivalente an (Kunststoffhandbuch 7, Polyurethane, 1983, S. 12)

Die Berechnung der Kennzahl, in nachstehender Gleichung Index genannt, erfolgt nach folgender Gleichung:

$$\text{Index} = \frac{100 \cdot \text{NCO\_Äquivalente}}{\text{OH\_Äquivalente}}$$

In der vorliegenden Erfindung sind die Begriffe "im Wesentlichen keine" und "im Wesentlichen frei von" so zu verstehen, dass das jeweilige Merkmal, in Bezug auf das jeweilige System, Gemisch oder die jeweilige Komponente in weniger als 2%, bevorzugt in weniger als 1%, stärker bevorzugt in weniger als 0,5%, am stärksten bevorzugt in weniger als 0,1% vorliegt oder nicht vorhanden ist.

Handelsübliche Polyurethan- und Polyisocyanuratschäume haben typischerweise eine Transluzenz von kleiner 10 % gemessen bei einer Schaumstoffdicke von 20 mm. Ohne an eine Theorie gebunden zu sein wird davon ausgegangen, dass aufgrund der, im Verhältnis zu den transluzenten Schäumen, kleinen Zellgrößen und aufgrund der vielen Zellstege Licht stark gestreut wird, wodurch die Lichttransmission aufgrund von starker Reflektion des einfallenden Lichtes an der Oberfläche stark abnimmt. Die Zellstegdicken von im Stand der Technik bekannten Schäume betragen üblicherweise dabei 0,01 bis 0,04 mm. Weiter zeigen herkömmliche Polyurethan- und Polyisocyanuratschäume auf Basis von aromatischen Di- und Polyisocyanaten eine hohe Tendenz zur witterungsbedingten Vergilbung, die wiederum die Transluzenz über die Zeit verringert und die Optik der Schäume negativ (Vergilbung) beeinflusst.

Polyolkomponente A1

Die erfindungsgemäße Zusammensetzung enthält mindestens ein, mit der Komponente B reaktives, Polyol A1 und optional mindestens ein Amin A2. Als Polyole werden bevorzugt Diole und Triole verwendet. Geeignete Polyole haben bevorzugt einen Siedepunkt bei 1 bar von größer als 150°C.

Beispiele für bevorzugte Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden. Besonders bevorzugt sind Glycerin, Ethylenglykol, Diethylenglykol, Propylenglykol, Butandiole, Neopentylglycol, Pentanole und Trimethylolpropan. Am stärksten bevorzugt sind Diethylenglykol, Trimethylolpropan und Glycerin.

Neben den reinen Polyolen bzw. Di- und Triolen können in geringem Umfang auch Carbonatdiole, Polyesterpolyole und Polyetherpolyole eingesetzt werden.

Letztere haben aber eine geringere Licht- und UV-Beständigkeit und sind deshalb weniger gut geeignet, insbesondere, wenn der erhaltene transluzente Schaum nicht durch UV-Licht absorbierenden transparenten Materialien geschützt ist. Außerdem bedingt die schlechtere Wasserlöslichkeit solcher Polyole eine verstärkte Blasenbildung welche in erfindungsgemäßen Verfahren zu tendenziell feinzelligeren Schäumen führt.

Komponente A2

In der Komponente A können gegebenenfalls Amine enthalten sein, bevorzugt sekundäre und / oder tertiäre Amine wie Dieethanolamin und / oder Triethanolamin und / oder Amin gestartete Polyether. Geeignete Amine haben bevorzugt einen Siedepunkt bei 1bar von größer als 200°C.

Komponente A3

Chemische Treibmittel sind dem Fachmann auf dem Gebiet der Schaumstoffe bekannt.
Die Menge des eingesetzten chemischen Treibmittels A3 hängt von der gewünschten Dichte des Schaums ab. Die Komponente A3 enthält Wasser und in einer bevorzugten Ausführungsform zusätzlich Ameisensäure.
Zusätzlich zu Wasser können in bevorzugten Ausführungsformen auch physikalische Treibmittel verwendet werden. Als physikalische Treibmittel eignen sich beispielsweise halogenierte Kohlenwasserstoffe (insbesondere schwer entflammbare oder nicht brennbare niedermolekulare Fluorkohlenwasserstoffe wie HFC-254fa (1,1,1,3,3-Pentafluorpropan), HFC-365mfc (1,1,1,3,3-Pentafluorbutan), Ester (insbesondere Methylformiat, Ethylformiat, Methylacetat und Ethylacetat oder Gemische davon), Gase wie Kohlenstoff, Stickstoff, sowie Kohlenwasserstoffe (insbesondere c-Pentan, n-Pentan, i-Pentan, alle Isomere von Hexan).

Komponente A4

Mindestens eine Komponente ausgewählt aus oberflächenaktiven Zusatzstoffen, insbesondere Silikontensiden und stärker bevorzugt Siloxan-Polyoxyalkylen-Copolymeren und Polydimethylsiloxan-Polyoxyalkylen-Copolymeren,

Komponente A5

Hilfs- und/oder Zusatzstoffe für Polyurethan- und Polyisocyanuratschaumstoffe sind dem Fachmann auf dem Gebiet bekannt und können optional enthalten sein. In bevorzugten Ausführungsformen können zum Schutz der Schäume Antioxidantien und Hitzestabilisatoren eingesetzt werden. Antioxidantien sind chemische Verbindungen, die einen Radiaklabbau und -zerfall verhindern oder verzögern. Dies sind zum einen Radiaklfänger, die reaktive H-Atome besitzen, wie sterisch gehinderte Phenole (z.B. kommerziell erhältlich als Irganox 1135) oder sie zersetzen Hydroperoxide (thermo-oxidativer Abbau), wie z.B. Thioester (kommerziell erhältlich als PS800). Bevorzugt enthält A5 mindestens eine Komponente ausgewählt aus Initiatoren, Additiven, Pigmenten, Füllstoffen und oder eine Kombination davon.

Komponente A6

In der Komponente A kann gegebenenfalls eine Komponente A6, nämlich mindestens ein Flammschutzmittel, enthalten sein. Die Menge von A6 hängt von den gewünschten Brandeigenschaften des Schaums ab und ist dem Fachmann bekannt. Als bevorzugte Flammschutzmittel werden farblose und nicht färbende Flammschutzmittel eingesetzt, stärker bevorzugt Phosphorhaltige Verbindungen, stärker bevorzugt Phosphate, besonders bevorzugt Triethylphosphat.

Katalysatoren A7

Bei der Bildung von Schaumstoffen aus Polyol/Wasser-Gemischen, Polyol/Wasser/Ameisensäure-Gemischen und Isocyanat bzw. Polyisocyanat ist der Einsatz geeigneter Katalysatoren erforderlich. Diese sind dem Fachmann bekannt.
Geeignete Katalysatoren sind z.B. Ammoniumformiat, Ammoniumacetat, Ammoniumoktanoat, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Natriumacetat, Natriumoctoat, Natriumethylhexoat, Kaliumformiat, Kaliumacetat, Kaliumethylhexanoat, Kaliumoctanoat sowie Mischungen davon. Um die Treibreaktion (Reaktion zwischen Wasser und gegebenenfalls Ameisensäure und Isocyanat) zu beschleunigen, können auch zusätzlich aminische Katalysatoren zum Einsatz kommen, wie beispielsweise 1,8-Diazabicyclo[5.4.0]undec-7-en (DBU) etc. In EP 0629607 A2 wird zum Beispiel die Herstellung von tertiären Aminogruppen aufweisende Verbindung und deren Verwendung als Katalysator beschrieben. Bevorzugt werden Katalysatoren auf Basis von Kalium Salzen von organischen Säuren eingesetzt. Besonders bevorzugt sind Kaliumacetat, Kaliumethylhexanoat. Bevorzugt wird die Treibreaktion durch synergistische Aminkatalysatoren wie zum Beispiel DBU beschleunigt.

Polyisocyanatkomponente B (auch bezeichnet als Komponente B)

Ausgangsverbindungen für die Polyisocyanatkomponente B für das erfindungsgemäße Verfahren sind B1 mindestens eine aliphatische oder cycloaliphatische Polyisocyanatkomponente oder eine Kombination davon, gegebenenfalls B2 mindestens ein hydrophiliertes Isocyanat und B3 mindestens einer aromatischen Polyisocyanatkomponente mit größer oder gleich 10 Gew.-Teile und bis zu 70 Gew.-Teile bevorzugt bis zu 50 Gew.-Teile und ganz besonders bevorzugt bis zu 40 Gew.-Teile, wobei die Gewichtsteile von B3 bezogen sind auf die Summe der Gewichtsteile von B1 bis B3, welche auf 100 Gew.-Teile normiert werden.

Die aromatische Polyisocyanatkomponente B3 ist die Gesamtheit aller Polyisocyanate, die aromatische Polyisocyanate enthalten oder daraus bestehen. Dies können monomere aromatische Di- und Triisocyanate sein. Es kann sich aber auch um oligomere Polyisocyanate handeln, die durch Oligomerisierung von monomeren Isocyanaten nach den bekannten Verfahren erhalten werden. Als Edukte für derartige Oligomerisierungen kommen Zusammensetzungen in Frage, die ausschließlich aus aromatischen Di- und ggf. Triisocyanaten bestehen. Es können aber auch Beimengungen von aliphatischen und / oder cycloaliphatischen Di- oder Triisocyanaten enthalten sein. Solche Beimengungen sind insbesondere bevorzugt, um den weiter unten in dieser Anmeldung als bevorzugt gekennzeichneten Isocyanatgehalt von höchstens 25 Gew.-% zu erreichen.

Der Einsatz der oben beschriebenen Polyisocyanatkomponenten B3 führt zu Polyisocyanatkomponenten B mit einem Gesamtgehalt an aromatischen Polyisocyanaten von wenigstens 5 Gew.-% und höchstens 70 Gew.-%, bevorzugt wenigstens 10 Gew.-% und höchstens 70 Gew.-%, stärker bevorzugt wenigstens 20 Gew.-% und höchstens 70 Gew.-%, noch stärker bevorzugt wenigstens 20 Gew.-% und höchstens 55 Gew.-% und am stärksten bevorzugt wenigstens 20 Gew.-% und höchstens 40 Gew.-% bezogen auf das Gesamtgewicht der Polyisocyanatkomponente B. Wird eine oligomere Polyisocyanatkomponente B3 eingesetzt, kann der Gesamtgehalt an aromatischen Isocyanaten vom Mengenanteil der Polyisocyanatkomponente B3 abweichen. Dies ist dann der Fall, wenn oligomere Polyisocyanatkomponenten B3 verwendet werden, die neben aromatischen Diisocyanaten auch aliphatische oder cycloaliphatische Diisocyanate als Aufbaukomponenten enthalten.

Solche Isocyanate werden typischerweise durch Phosgenierung hergestellt, können aber auch auf phosgenfreiem Weg, beispielsweise durch Urethanspaltung, hergestellt werden. In einem bevorzugten Fall werden die Produkte einer gezielten Trimerisierung von Diisocyanaten, als bei Raumtemperatur (23°C) flüssige Ausgangsverbindungen, eingesetzt. Diese und deren Herstellungsverfahren werden beispielsweise in der EP 0010589 A1 und EP 0047452 A1 beschrieben. Alternative Synthesewege sind beispielsweise die katalytische Carbonylierung von Nitro-Verbindungen bzw. Aminen oder die Umsetzung primärer Amine mit Di-tert-butyldicarbonat (Diboc) in Anwesenheit von 4-(Dimethylamino)-pyridin (DMAP).

Gewöhnliche Polyurethan- und Polyisocyanuratschaumstoffe für den Einsatz als Dämm- und Dichtstoffe werden üblicherweise auf Basis von Mischungen aus 4,4'-, 2,4'- und 2,2'-Diphenylmethandiisocyanaten (MDI) und Polyphenyl-polymethylen-polyisocyanaten (p-MDI) hergestellt. Solche Schaumstoffe sind allerdings weder transluzent noch farb- noch lichtecht und neigen zu starker Verfärbung. Diese anfängliche Vergilbung geht später oft in eine bräunliche Verfärbung über. Daher sind handelsübliche Polyurethan- und Polyisocyanuratschaumstoffe auf Basis aromatischer Isocyanate (mit einem Anteil von über 20 Gew.-% an dem gesamten Isocyanat und einer Kennzahlen unter 200, das heißt ein beträchtlicher Anteil der aromatischen Isocyanate liegt im Produkt als Umsetzung mit einem Alkohol oder einem Amin als Urethan oder Harnstoff vor) per se nicht geeignet für die Herstellung transluzenter Schäume.

Gemäß der vorliegenden Erfindung können überraschenderweise solche aromatischen Isocyanate in bis zu 60% Abmischung mit aliphatischen Isocyanaten bei hohen Kennzahlen von mindestens 200, bevorzugt von mindestens 300 und besonders bevorzugt von mindesten 500 zur Herstellung von farbstabilen und transparente Schäumen benutzt werden. Wie oben dargelegt, ist die Anwesenheit von Urethangruppen im fertigen Schaum unerwünscht. Deswegen werden als Bestandteile der Komponente B vorzugsweise Polyisocyanate ausgewählt, die einen geringen Gehalt dieser Gruppen aufweisen und vorzugsweise frei davon sind. Diese Bedingung erfüllen alle monomeren Diisocyanate. Bei der Verwendung von oligomeren Polyisocyanaten werden Verbindungen bevorzugt, deren kombinierter Gehalt an Urethangruppen gering ist. Die Polyisocyanatkomponente B in ihrer Gesamtheit weist vorzugsweise einen kombinierten Gehalt an Urethangruppen (-NH-CO-O-) von höchstens 5,0 Gew.-%, bevorzugt von höchstens 3,5 Gew.-%, besonders bevorzugt von höchstens 2,5 Gew.-%, bezogen auf ihr Gesamtgewicht auf.

Der Gesamtgehalt an Wasser und NH-Gruppen in der Rezeptur ist bevorzugt so zu wählen, dass Harnstoffgruppen (-NH-CO-NH-) im fertigen Schaum höchstens 4,5 Gew.-%, bevorzugt von höchstens 2,8 Gew.-%, besonders bevorzugt von höchstens 1,3 Gew.-%, bezogen auf das Gesamtgewicht des fertigen Schaumes aufweisen.

Die Anzahl der Hydroxylgruppen ist so zu wählen, dass Urethangruppen (-NH-CO-O-) im fertigen Schaum höchstens 6 Gew.-%, bevorzugt von höchstens 4,5 Gew.-%, besonders bevorzugt von höchstens 3,5 Gew.-%, bezogen auf das Gesamtgewicht des fertigen Schaumes aufweisen.

Die Polyisocyanatkomponente B weist vorzugsweise eine Viskosität gemäß DIN EN ISO 3219:1994-10 bei 23°C von 5 bis 30000 mPas auf, stärker bevorzugt von 200 bis 25000 mPas, am stärksten bevorzugt von 800 bis 22500 mPas.

Es ist vorteilhaft, wenn mindestens 30 Gew.-%, insbesondere 60 Gew.-%, basierend auf dem Gesamtgewicht von B, aliphatische Polyisocyanate verwendet werden. Besonders bevorzugt sind Isocyanuratgruppenhaltige Polyisocyanate auf Basis von 1,6-Diisocyanatohexan (HDI) oder 1,5 Diisocyanatopentan (PDI) mit einem NCO-Gehalt < 25 % und einer mittleren NCO-Funktionalität von > 2.

In einer besonderen Ausführungsform können oligomere Polyisocyanate, die aromatische Di- und / oder Trisocyanate enthalten, mit einem Anteil von bis zu 70 Gew.-% eingesetzt werden, wenn diese bei ihrer Herstellung statistisch mit aliphatischen Isocyanaten zu oligomeren Polyisocyanaten mit einem Isocyanatgehalt von < 25% co-trimerisiert wurden. Besonders bevorzugt sind Isocyanuratgruppen-haltige Polyisocyanate auf Basis von 2,4/2,6-Toluendiisocyanat (2,4-TDI, 2,6-TDI). Ebenfalls, aber weniger bevorzugt, können auch Diphenylmethan-2,4'-diisocyanat und / oder Diphenylmethan-4,4'-diisocyanat eingesetzt werden. Die vorgenannten aromatischen Diisocyanate werden bevorzugt als Mischisocyanurate mit HDI oder PDI hergestellt um den vorgenannten Isocyanatgehalt zu erreichen. Deswegen sind aus TDI in Kombination mit HDI und/oder PDI aufgebaute Oligomere besonders bevorzugt.

In einer bevorzugten Ausführungsform werden zur Kompatibilisierung, insbesondere in Gegenwart polarer, chemischer Treibmittel wie Wasser und/oder Ameisensäure, hydrophilierte Isocyanuratgruppen-haltiges Polyisocyanate B2 eingesetzt. In einer bevorzugten Ausführungsform ist B2 in mindestens 1 Gew.-Teil, bevorzugt mindestens 3 Gew.-Teilen, stärker bevorzugt mindestens 5 Gew.-Teilen, basierend auf der Summe der Gew.-Teile von B1 bis B3, welche auf 100 Gew.-Teile normiert werden. In einer weiteren bevorzugten Ausführungsform ist B2 in 3 bis 35 Gew.-Teilen, bevorzugt in 5 bis 15 Gew.-Teilen, stärker bevorzugt in 8 bis 12 Gew.-Teilen, vorhanden, basierend auf der Summe der Gew.-Teile von B1 bis B3, welche auf 100 Gew.-Teile normiert werden. Covestro Deutschland AG bietet solche Verbindungen kommerziell unter dem Namen Bayhydur® für den Einsatz als Vernetzer in der Lackindustrie an. Insbesondere ist das kommerziell erhältliche hydrophilierte Isocyanat Bayhydur® 3100 mit einem NCO-Gehalt von 17,4 Gew.-%, einer mittleren NCO-Funktionalität von 3,2 (nach GPC), einem Gehalt an monomerem HDI von maximal 0,1 Gew.-%, einer Viskosität (23°C) von 2800 mPas geeignet und ein Beispiel für ein hydrophiles Isocyanuratgruppen-haltiges Polyisocyanat auf Basis von 1,6-Diisocyanatohexan (HDI). Andere hydrophile Isocyanatgruppen-haltige Polyisocyanate anderer Hersteller kommen hier ebenfalls in Betracht. Ebenso ist eine *in situ* Herstellung von hydrophilierten Isocyanaten vor oder während der Schäumungsreaktion durch Zusatz geeigneter mono- oder polyfunktioneller hydrophiler Isocyanat-reaktiver Verbindungen wie z.B. Polyether, Polyester und Sulfonsäuregruppen tragende Verbindungen und anderer dem Fachmann bekannten Verbindungen möglich.

Besonders bevorzugt ist eine Polyisocyanatkomponente B die einen Anteil an monomeren Diisocyanaten in der Polyisocyanatzusammensetzung B von höchstens 50 Gew.-%, vorteilhafter von höchstens 25% und insbesondere vorteilhaft von höchstens 10 Gew.-%, jeweils bezogen auf das Gesamtgewicht der Polyisocyanatkomponente B, aufweist. Die Reaktionsenthalpie der Trimerisierungsreaktion zu Polyisocyanaten ist mit -75 kJ/mol NCO sehr hoch. Dies gilt insbesondere für die Herstellung von Polyisocyanuratschäumen, da poröse Materialien im Allgemeinen und Schäume im Besonderen eine sehr geringe Wärmeleitfähigkeit besitzen und damit eine adiabatische Reaktionsführung erfolgt, was zu einem starken Temperaturanstieg und damit häufig zu starker Vergilbung führt. Daher ist eine Reaktion ausgehend von monomeren Diisocyanaten, besonders bei monomeren Diisocyanaten mit hohem Isocyanatgehalt von mindestens 50% (z.B. BDI, PDI, HDI, TIN), nicht für großvolumige Schaumkörper, unter den dabei herrschenden nahezu adiabatischen Bedingungen bevorzugt, sondern bevorzugt z.B. für die Anwendung in Doppelbandanlagen zur Herstellung von Paneelen oder andere Anwendungen wobei eine gute Temperatur bzw. Reaktionskontrolle möglich ist. Die monomerarme Polyisocyanatkomponente B und die darin enthaltenen oligomeren Polyisocyanate werden üblicherweise durch Modifizierung einfacher aliphatischer, cycloaliphatischer, araliphatischer und/oder aromatischer monomerer Diisocyanate oder Mischungen solcher monomeren Diisocyanate erhalten. Die Herstellung von Polyisocyanuraten, zum Beispiel beschrieben in der US 3645979A, wird beispielsweise im Stand der Technik hauptsächlich ausgehend von flüssigen monomeren Diisocyanaten (z.B. Stearyldiisocyanat, Dodecyldiisocyanat, Decyldiisocyanat, Nonyldiisocyanat, Octyldiisocyanat, Hexamethylendiisocyanat (HDI), Pentamethylendiisocyanat (PDI), Isophorondiisocyanat (IPDI), 4,4'-Diisocyanatodicyclohexylmethan ($H_{12}$MDI), Toluoldiisocyanat (TDI), Diphenylmethandiisocyanate (4,4'-Diphenylmethandiisocyanat, 2,4'-Diphenylmethandiisocyanat, 2,2'-Diphenylmethandiisocyanat) (MDI), Naphthalin-1,5-diisocyanat (NDI), 2,5- und 2,6-Bis(isocyanatomethyl)bicyclo[2.2.1]heptan (NBDI), 1,4-Butandiisocyanat (BDI), aliphatischer wie aromatischer Natur beschrieben.

Bevorzugte Verbindungen für die Polyisocyanatkomponente B sind jene auf Basis von Stearyldiisocyanat, Dodecyldiisocyanat, Decyldiisocyanat, Nonyldiisocyanat, Octyldiisocyanat, Hexamethylendiisocyanat (HDI), Pentamethylendiisocyanat (PDI), Isophorondiisocyanat (IPDI), 4,4'-Diisocyanatodicyclohexylmethan ($H_{12}$MDI), Toluoldiisocyanat (TDI), 2,5- und 2,6-Bis(isocyanatomethyl)bicyclo[2.2.1]heptan (NBDI), 1,4-Butandiisocyanat (BDI),sowie Abmischungen mit ihren Diisocyanat Vorläufern sowie anderen kompatiblen und colöslichen isocyanatfunktionellen Prepolymeren wie Uretdione, Biurete, Harnstoffe, asymetrische Trimere, Mischtrimere verschiedener Isocyanate und andere die bei der Herstellung von Trimeren Isocyanuratverbindungen mit einer Funktionalität von mindestens 2 anfallen und literaturbekannt sind.

Besonders bevorzugt sind Isocyanuratgruppen-haltige Polyisocyanate auf Basis von 1,5-Diisocyanatopentan (PDI) mit einem NCO-Gehalt von 23,2 %, 1,6-Diisocyanatohexan (HDI) mit einem NCO-Gehalt von 21,5 %, einer mittleren NCO-Funktionalität von 3 (nach GPC), einem Gehalt an monomerem PDI von 0,3 Gew.-% und einer Viskosität von 13.000 mPas (25 °C) oder Isocyanuratgruppen-haltiges Polyisocyanat auf Basis von 1,6-Diisocyanatohexan (HDI) mit einem NCO-Gehalt von 21,8 Gew.-%, einer mittleren NCO-Funktionalität von 3,5 (nach GPC), einem Gehalt an monomerem HDI von maximal 0,1 Gew.-% und einer Viskosität von 3.000 mPas (23 °C) oder Isocyanuratgruppen-haltiges Polyisocyanat auf Basis von 1,6-Diisocyanatohexan (HDI) mit einem NCO-Gehalt von 21,7 Gew.-%, einer mittleren NCO-Funktionalität von 3,1 (nach GPC), einem Gehalt an monomerem HDI von maximal 0,1Gew.-% und einer Viskosität von 1.200 mPas (23 °C) oder Isocyanuratgruppen-haltiges Polyisocyanat auf Basis von 1,6-Diisocyanatohexan (HDI) mit einem NCO-Gehalt von 20,0 Gew.-%, einer mittleren NCO-Funktionalität von 4,2 (nach GPC), einem Gehalt an monomerem HDI von maximal 0,2 Gew.-% und einer Viskosität von 22.700 mPas (20 °C). Ebenfalls bevorzugt ist ein Isocyanuratgruppen-haltiges Polyisocyanat auf Basis von 1,6-Diisocyanatohexan (HDI) mit einem NCO-Gehalt von 23,2 Gew.-%, einer mittleren NCO-Funktionalität von 3,2 (nach GPC), einem Gehalt an monomerem HDI von maximal 0,2 Gew.-% und einer Viskosität von 1200 mPas (23 °C), ein Isocyanuratgruppen-haltiges Polyisocyanat auf Basis von 1,6-Diisocyanatohexan (HDI) mit einem NCO-Gehalt von 20 Gew.-%, einer mittleren NCO-Funktionalität von 4,2 (nach GPC), einem Gehalt an monomerem HDI von kleiner 0,25 Gew.-% und einer Viskosität von 16000 mPas (23 °C), ein hydrophiles Isocyanuratgruppen-haltiges Polyisocyanat auf Basis von 1,6-Diisocyanatohexan (HDI) mit einem NCO-Gehalt von 17,4 Gew.-%, einer mittleren NCO-Funktionalität von 3,2 (nach GPC), einem Gehalt an monomerem HDI von maximal 0,1 Gew.-% und einer Viskosität von 2800 mPas (23 °C), ein Isocyanuratgruppen-haltiges Polyisocyanat auf Basis von 1,6-Diisocyanatohexan (HDI) mit einem NCO-Gehalt von 21,7 Gew.-%, einer mittleren NCO-Funktionalität von 3,5 (nach GPC), einem Gehalt an monomerem HDI von maximal 0,1 Gew.-% und einer Viskosität von 3000 mPas (23 °C) und ein Isocyanuratgruppen-haltiges Polyisocyanat auf Basis von 1,5-Diisocyanatopentan (PDI) mit einem NCO-Gehalt von 21,5 Gew.-%, einer mittleren NCO-Funktionalität von 3 (nach GPC), einem Gehalt an monomerem PDI von weniger als 0,3 Gew.-% und einer Viskosität von 9500 mPas (23 °C). Ein Isocyanuratgruppen-haltiges Polyisocyanat auf Basis von 2,4-Toluendiisocyanat und 1,6-Diisocyanatohexan mit einem NCO-Gehalt von 24,4 Gew.-% (berechnet), einer mittleren NCO-Funktionalität von 3 und einer Viskosität < 100.000 MPas bei 23°C ist besonders bevorzugt.

Die mittlere NCO-Funktionalität der Komponente B wird, sofern nicht anders beschrieben, mittels Gelpermeationschromatographie (GPC) bestimmt. Die Funktionalität ist ein Ausdruck für die Zahl der reaktiven Gruppen pro Molekül, d. h. für die Zahl der potentiellen Verknüpfungsstellen bei der Ausbildung eines Netzwerkes. Polyisocyanate, wie sie z, B. bei der Trimerisierung von Diisocyanaten gebildet werden, bestehen jedoch nicht nur aus einer definierten Molekülsorte, sondern enthalten eine breite Verteilung unterschiedlicher Moleküle mit unterschiedlichen Funktionalitäten. Als Bestimmungsgröße für die Polyisocyanate wird daher die mittlere Funktionalität angegeben. Die mittlere Funktionalität von Polyisocyanaten ist durch das Verhältnis von zahlenmittlerem Molekulargewicht und Äquivalentgewicht eindeutig bestimmt und wird im Allgemeinen aus der mit Hilfe der Gelpermeationschromatographie ermittelten Molekulargewichtsverteilung berechnet.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Besonders bevorzugt sind Polyisocyanate mit Anteilen von Isocyanuratgruppen von > 10 Gew.-%, ganz besonders bevorzugt > 20 Gew.-% in der Polyisocyanatkomponente B.

Unabhängig vom der zu Grunde liegenden oligomeren Struktur (Uretdion-, Isocyanurat-, Allophanat-, Biuret-, Iminooxadiazindion- und/oder Oxadiazintrionstruktur) weist die beim erfindungsgemäßen Verfahren einzusetzende Polyisocyanatkomponente B und/oder die darin enthaltenen oligomeren Polyisocyanate vorzugsweise eine (mittlere) NCO-Funktionalität von 2,0 bis 6, vorzugsweise von 2,3 bis 4,0 auf.

Besonders bevorzugte Ergebnisse stellen sich ein, wenn die erfindungsgemäß einzusetzende Polyisocyanatkomponente B einen Gehalt an Isocyanatgruppen von 15 bis 40 Gew.-%, vorzugsweise von 20 bis 30 Gew.-%, jeweils bezogen auf die gesamte Polyisocyanatzusammensetzung B, aufweist.

Geeignete kommerziell erhältliche Polyisocyanate sind unter anderem Desmodur® XP 2675, Desmodur® XP 2489, Desmodur® N3300, Desmodur® N3600, Desmodur® H, Bayhydur® 3100, Desmodur® N eco 7300, Desmodur® HL BA und Desmodur® HL EA und Desmodur® H, Desmodur® I, Desmodur® W, Desmodur T100, Desmodur T80, Desmodur T65, Desmodur 44M Flakes, Desmodur 44M Liquid, Desmodur Vers. Prod. PU 1806 - alle kommerziell erhältlich von der Covestro Deutschland AG.

Erfindungsgemäße Polyurethan- oder Polyisocyanuratschaumstoffe

In einer bevorzugten Ausführungsform weist die Schaumdicke des erfindungsgemäßen Schaumstoffs senkrecht zur Lichteinstrahlung mindestens ein Multiplikator von 3 bevorzugt 5 besonders bevorzugt 10 * Zellen Dicke mit Bezug auf den durchschnittlichen Zellendurchmesser auf.

In einer weiteren bevorzugten Ausführungsform weist der erfindungsgemäße Schaumstoff einen Lambda-Wert von kleiner 0,08 bevorzugt kleiner 0,06 besonders bevorzugt kleiner 0,05 W/mK, gemessen gemäß DIN 52616:1977-11 auf.

In einer weiteren bevorzugten Ausführungsform besitzt der erfindungsgemäße Schaumstoff einen kristallinen Anteil kleiner 20% bevorzugt kleiner 10% besonders bevorzugt kleiner 2 %. In einer besonders bevorzugten Ausführungsform enthalten die erhaltenen erfindungsgemäßen Schaumstoffe kristalline Anteile, deren Kristallgrößen sichtbares Licht nicht merklich brechen.

Allgemeines Herstellungsverfahren

Schäumungsprozesse finden im Allgemeinen entweder chemisch oder physikalisch statt. Bei der Herstellung von PUR/PIR Schäume werden die eingesetzten Komponenten (A und B) entweder durch eine Hochdruckvermischung oder durch eine Niederdruckvermischung (meist Stachelrührer) vermischt. Bei Mischungen verschiedener Isocyanate werden diese bevorzugt zuvor abgemischt. Gleiches gilt für eine Mischung der A-Komponenten. Dabei wird in bevorzugten Ausführungsformen des Standes der Technik absichtlich Luft eingemischt, da die Mikroluftbläschen Nukleierungskeime sind und somit ein feinzelligerer Schaum entsteht, was insbesondere für Isolierhartschäume gewünscht ist.

Die erfindungsgemäßen Schaumstoffe werden in einer bevorzugten Ausführungsform durch ein erfindungsgemäßes Verfahren erhalten, in dem die Reaktionskomponenten unter weitgehender Vermeidung von Mikroblasen, bevorzugt mit einem Blasendurchmesser < 0,5 mm, in geeigneten Mischaggregaten gemischt werden. Dabei ist eine weitgehende Vermeidung von Mikroblasen bevorzugt, welche zum Beispiel durch eine optisch transparente oder transluzente Mischung im Gegensatz zu einer milchig trüben Mischung gekennzeichnet ist. Man kann hierzu bereits als Indikator die Trübung der Zusammensetzung nach DIN EN ISO 7027 direkt nach dem Vermischen messen. Ohne an eine Theorie gebunden zu sein wird davon ausgegangen, dass je weniger Mikroblasen im Reaktionsgemisch nach der Vermischung enthalten sind, desto höher wird anschließend die Lichttransmission sein. Durch die Mikroblasen, welche als Kondensationkeime für die bevorzugt chemischen Treibmittel wirken können, wird das Licht gestreut und der daraus entstehende Schaum hat eine geringere Lichttransmission.

Es können mit konventionellem Herstellungsverfahren, d.h. unter Verwendung üblicher Mischaggregate / Rührer hohe Lichttransmissionen erreicht werden, wenn bevorzugt sehr langsam reagierende Schaumsysteme verwendet werden, das heißt die Schäume reagieren erst dann, wenn das anfänglich eingemischte Nukleierungsmittel (Keimzellen), wie z.B. Luft, sich wieder weitgehend, d.h. im Wesentlichen, aufgelöst hat bzw. die sehr kleinen Bläschen zu größeren (etwa > 0,5 mm) koalesziert sind und nach oben gestiegen sind bzw. sich verflüchtigt haben. Dem Fachmann ist es bekannt, dass er durch die Auswahl geeigneter Katalysatoren und Treibmittel die Reaktionsgeschwindigkeit der Schaumsysteme steuern kann. Für einen wirtschaftlichen Einsatz der gewünschten transluzenten und temperaturisolierenden Schäume ist allerdings eine Abbindezeit von < 2h, bevorzugt < 1h, ganz bevorzugt < 30min und ganz besonders bevorzugt < 15 min, einzustellen.

Blasenfreies Herstellverfahren

In einem bevorzugten Herstellungsverfahren werden beim Vermischen der Substanzen gasförmige Nukleierungsmittel, hier insbesondere Luft (sogenannte Beimischluft), im Wesentlichen ausgeschlossen. Die Reaktionskomponenten sind folglich im Wesentlichen frei von diesen gasförmigen Nukleierungsmitteln. Durch das Fehlen von Luft oder allgemein, durch das Fehlen gasförmiger Nukleierungsmittel, entsteht erfindungsgemäß ein deutlich grobzelligerer Schaum, der eine wesentlich größere Lichttransmission hat. Feinzellige Schäume streuen das Licht stärker, was zu Lasten der Lichttransmission geht.

Die vorliegende Erfindung betrifft insbesondere die folgenden Gegenstände:
Nach einem ersten Gegenstand betrifft die Erfindung ein Verfahren zur Herstellung von transluzenten Polyurethan- und Polyisocyanuratschaumstoffen durch Umsetzung einer Komponente A umfassend, bevorzugt bestehend aus,

A1 mindestens ein, mit der Komponente B reaktives, Polyol, bevorzugt mit einem Molekulargewicht < 200g/mol, stärker bevorzugt < 150 g/mol;

A2 gegebenenfalls mindestens ein Amin;

A3 Wasser gegebenenfalls in Anwesenheit von Ameisensäure und / oder physikalischen Treibmitteln;

A4 mindestens einen Schaumstabilisator wie beispielsweise Silikontenside bevorzugt aus der Gruppe der Siloxan-Polyoxyalkylen-Copolymere und / oder Polydimethylsiloxan-Polyoxyalkylen-Copolymere

A5 gegebenenfalls Hilfs- und/oder Zusatzstoffe wie Stabilisatoren, UV-Schutzmittel, Initiatoren, Additive, Pigmente, Füllstoffe oder eine Kombination davon;

A6 gegebenenfalls mindestens ein Flammschutzmittel, bevorzugt farblose und nicht verfärbende Flammschutzmittel, stärker bevorzugt Phosphor haltige Verbindungen, noch stärker bevorzugt Phosphate, insbesondere bevorzugt Triethylphosphat;

A7 mindestens einen Katalysator;

und eine Komponente B, deren Gehalt an aromatischen Polyisocyanaten wenigstens 5 Gew.-% und höchstens 70 Gew.-% beträgt, umfassend,

B 1 mindestens eine aliphatische oder cycloaliphatische Polyisocyanatkomponente oder eine Kombination davon,

B 2 gegebenenfalls mindestens ein hydrophiliertes Isocyanat, bevorzugt in 3 bis 25 Gew.-Teilen, bevorzugt in 5 bis 15 Gew.-Teilen, stärker bevorzugt in 8 bis 12 Gew.-Teilen;

B 3 größer oder gleich 10 Gew.-Teile und bis zu 70 Gew.-Teile bevorzugt bis zu 50 Gew.-Teile und ganz besonders bevorzugt bis zu 40 Gew.-Teile einer aromatischen Polyisocyanatkomponente, wobei die Gewichtsteile von B3 bezogen sind auf die Summe der Gewichtsteile von B1 bis B3, welche auf 100 Gew.-Teile normiert werden. , bevorzugt auf Basis von TDI und / oder auf Basis von Mischtrimerisaten von TDI und HDI und / oder TDI und PDI.

wobei die Gewichtsteile von B2 und B3 bezogen sind auf die Summe der Gewichtsteile von B1 bis B3, welche auf 100 Gew.-Teile normiert werden, dadurch gekennzeichnet, dass die Umsetzung der Komponente A mit der Komponente B bei einer Isocyanat-Kennzahl von wenigstens 200, bevorzugt 250 bis 600, stärker bevorzugt 300 bis 450, durchgeführt wird, und wobei bevorzugt die Reaktionsmischung vor dem Einsatz der Treibreaktion klar ist und eine Trübung von weniger als 90%, bevorzugt weniger als 70% und stärker bevorzugt weniger als 50% nach DIN EN ISO 7027:2016-11 aufweist;

und wobei die erhaltenen transluzenten Polyurethan- und Polyisocyanuratschaumstoffe eine Lichttransmission nach EN ISO 13468-2:2006 von mindestens 10%, bevorzugt von mindestens 20%, stärker bevorzugt von mindestens 10% bis 80 %, noch stärker bevorzugt mindestens 20 bis 60%; am stärksten bevorzugt von mindestens 20% bis 50% jeweils gemessen bei einer Schichtdicke des Schaumstoffs von 20 mm, aufweisen; und

wobei die erhaltenen transluzenten Polyurethan- und Polyisocyanuratschaumstoffe einen Haze von mindestens 70%, bevorzugt mindestens 80%, stärker bevorzugt mindestens 90%, noch stärker bevorzugt mindestens 98%, am stärksten bevorzugt mindestens 99%, bestimmt nach ASTM D1003-13, jeweils gemessen bei einer Schichtdicke des Schaumstoffs von 20 mm, aufweisen.

Nach einem zweiten Gegenstand betrifft die Erfindung ein Verfahren gemäß Gegenstand 1, dadurch gekennzeichnet, dass der erhaltene transluzente Polyurethan- oder Polyisocyanuratschaumstoff eine Wärmeleitfähigkeit (gemessen gemäß DIN 52612:2-1984-06) von kleiner als 100 mW/(m*K), bevorzugt von kleiner als 80 mW/(m*K) und insbesondere bevorzugt von kleiner als 60 mW/(m*K), am stärksten bevorzugt von kleiner als 50 mW/(m*K) aufweist.

Nach einem dritten Gegenstand betrifft die Erfindung ein Verfahren gemäß einem der vorstehenden Gegenstände, dadurch gekennzeichnet, dass der erhaltene transluzente Polyurethan- oder Polyisocyanuratschaumstoff einen NCO-Modifizierungsgrad von mindestens 30 Mol% bevorzugt von 50 bis 95% Mol% und besonders bevorzugt von 60 bis 85 Mol% aufweist.

Der Modifizierungsgrad ist dabei der Anteil (in Mol%) der insgesamt vorhandenen reaktiven NCO-Gruppen, der an einer Modifizierungsreaktion beteiligt ist, also letztendlich in eine funktionelle Gruppe der Art Allophanat oder Biuret, Uretdion, Isocyanurat oder Carbodiimid/Uretonimin umgewandelt wird. Dabei kann der Modifizierungsgrad sowie die Isocyanuratbildung durch Wahl des Katalysators, im Folgenden auch als Trimerisierungskatalysator bezeichnet, beeinflusst werden. Geeignete Katalysatoren werden nachstehend offenbart.

Nach einem vierten Gegenstand betrifft die Erfindung ein Verfahren gemäß einem der vorstehenden Gegenstände, dadurch gekennzeichnet, dass der erhaltene transluzente Polyurethan- oder Polyisocyanuratschaumstoff farblos bis weiß ist und einen Yellowing Index (gemessen nach ASTM E 313:2015) von kleiner 30, bevorzugt kleiner 20 und besonders bevorzugt von kleiner 15 aufweist, jeweils bezogen auf eine Schichtdicke des Schaumstoffs von 20 mm.

Nach einem fünften Gegenstand betrifft die Erfindung ein Verfahren gemäß einem der vorstehenden Gegenstände dadurch gekennzeichnet, dass der erhaltene Polyurethan- oder Polyisocyanuratschaumstoff als ein zu mindestens 40%, bevorzugt mindestens 50%, stärker bevorzugt mindestens 60% geschlossenzelliger Polyurethan- oder Polyisocyanuratschaumstoff vorliegt. Neben der Lichttransmission hat die Zellgröße ebenfalls einen Einfluss auf die Wärmeleitfähigkeit. Die Wärmeleitfähigkeit nimmt mit kleiner werdender Zellgröße ab, bevorzugt sind die vorstehend genannten Bereiche. Die Geschlossenzelligkeit wird dabei an einem Polyurethan- oder Polyisocyanuratschaumstoff bestimmt, welcher in einem offenen Gefäß oder auf einer Platte nach Schneiden in einer Dicke von bevorzugt > dem 10* mittleren Zelldurchmesser hergestellt wurde, damit der Effekt der aufgeschnittenen Zellen vernachlässigt werden kann. Die Bestimmung kann gemäß DIN EN ISO 4590:1986 erfolgen.

Nach einem sechsten Gegenstand betrifft die Erfindung ein Verfahren gemäß einem der vorstehenden Gegenstände dadurch gekennzeichnet, dass der erhaltene Polyurethan- oder Polyisocyanuratschaumstoff eine mittlere Zellgröße zwischen 1,0 mm und 20 mm, stärker bevorzugt zwischen 1,0 mm und 10,0 mm oder 1,0 mm und 6,0 mm, und besonders bevorzugt zwischen 2,0 mm und 5,0 mm, aufweist.

Die Zellgröße wird dabei unter Verwendung eines Lichtmikroskops bestimmt. Dabei wird der größte Abstand zwischen zwei Zellkanten als Zellgröße definiert.

Nach einem siebten Gegenstand betrifft die Erfindung ein Verfahren gemäß einem der vorstehenden Gegenstände dadurch gekennzeichnet, dass der erhaltene Polyurethan- oder Polyisocyanuratschaumstoff eine Rohdichte des erhaltenen Schaums von höchstens 300 kg/m³, bevorzugt höchstens 200 kg/m³, besonders bevorzugt höchstens 100 kg/m³ und ganz besonders bevorzugt höchstens 50 kg/m³ (bestimmt mittels DIN EN ISO 845:2009-10) aufweist.

Nach einem achten Gegenstand betrifft die Erfindung ein Verfahren gemäß einem der vorstehenden Gegenstände dadurch gekennzeichnet, dass der erhaltene Polyurethan- oder Polyisocyanuratschaumstoff eine mittlere Zellstegdicke von mindestens 0,05 mm bevorzugt mindestens 0,1 mm und/oder besonders bevorzugt höchstens 0,5 mm, stärker bevorzugt höchstens 0,4 mm aufweist.

Die Zellstegdicke wird dabei unter Verwendung eines Lichtmikroskops bestimmt. Dabei wird die Dicke eines Zellsteges in der Mitte zwischen zwei Zwickeln als Zellstegdicke definiert.

Nach einem neunten Gegenstand betrifft die Erfindung ein Verfahren gemäß einem der vorstehenden Gegenstände, dadurch gekennzeichnet, dass die Komponente A enthält:

10 bis 99,3 Gew.-Teile, bevorzugt 20 bis 90 Gew.-Teile, stärker bevorzugt 30 bis 80 Gew.-Teile, am stärksten bevorzugt 50 bis 70 Gew.-Teile von A1;
0 bis 10 Gew.-Teile, bevorzugt 0 bis 5 Gew.-Teile, am stärksten bevorzugt 0 bis 2 Gew.-Teile von A2;
0,1 bis 80 Gew.-Teile, bevorzugt 15 bis 60 Gew.-Teile, stärker bevorzugt 25 bis 45 Gew.-Teile von A3;
0,0 bis 50 Gew.-Teile, bevorzugt 0,1 bis 40 Gew.-Teile, stärker bevorzugt 0,5 bis 30 Gew.-Teile von A5;
0,0 bis 80 Gew.-Teile, bevorzugt 0,1 bis 60 Gew.-Teile, stärker bevorzugt 0,5 bis 40 Gew.-Teile von A6;
wobei die Summe von A1 bis A7 100 Gew.-Teile ergibt.

Nach einem zehnten Gegenstand betrifft die Erfindung ein Verfahren gemäß einem der vorstehenden Gegenstände, dadurch gekennzeichnet, dass

0,5 bis 25 Gew.-Teile, bevorzugt 5 bis 20 Gew.-Teile von A4;

0,1 bis 60 Gew.-Teile, bevorzugt 1 bis 50 Gew.-Teile, stärker bevorzugt 2 bis 45 Gew.-Teile, am stärksten bevorzugt 5 bis 35 Gew.-Teile von A7 enthalten sind, bezogen auf 100 Gew.-Teile die sich ergeben aus der Summe von A1 bis A7.

Nach einem elften Gegenstand betrifft die Erfindung ein Verfahren gemäß einem der vorstehenden Gegenstände, dadurch gekennzeichnet, dass im Wesentlichen keine gasförmigen Nukleierungsmittel eingetragen durch den Mischprozess, insbesondere Luft, bei der Reaktion anwesend sind.

Nach einem zwölften Gegenstand betrifft die Erfindung ein Verfahren gemäß einem der vorstehenden Gegenstände, dadurch gekennzeichnet, dass die Abbindezeit < 2h, bevorzugt <1h, besonders bevorzugt < 30 min und ganz besonders bevorzugt < 15 min beträgt und gegebenenfalls geeignete Katalysatoren wie Kaliumacetat oder Kaliumethylhexanoat verwendet werden.

Nach einem dreizehnten Gegenstand betrifft die Erfindung ein Verfahren gemäß einem der vorstehenden Gegenstände, dadurch gekennzeichnet, dass das Vermischen in einem Mischer mit vorgeschalteter Entgasungseinheit durchgeführt wird.

Nach einem vierzehnten Gegenstand betrifft die Erfindung einen transluzenten Polyurethan- oder Polyisocyanuratschaumstoff, welcher durch ein Verfahren der vorstehenden Gegenstände erhalten wurde.

Nach einem fünfzehnten Gegenstand betrifft die Erfindung ein Mehrschichtverbundelement, in welchem der transluzente Polyurethan- oder Polyisocyanuratschaumstoff gemäß Gegenstand 14 zwischen zwei, bevorzugt transluzenten oder transparenten, Elementen vorliegt.

Nach einem sechzehnten Gegenstand betrifft die Erfindung ein Mehrschichtverbundelement gemäß Gegenstand 15, dadurch gekennzeichnet, dass die zwei, bevorzug transluzenten oder transparenten, Elemente Folien oder Platten sind, besonders bevorzugt sind diese hergestellt aus den Materialien Glas, Polymethylmethacrylat oder Polycarbonat. In einer weiteren bevorzugten Ausführungsform sind beide Elemente aus unterschiedlichem Material.

Nach einem siebzehnten Gegenstand betrifft die Erfindung die Verwendung des transluzenten Polyurethan- oder Polyisocyanuratschaumstoffs gemäß Gegenstand 14 oder des Mehrschichtverbundelements gemäß Gegenstand 15 oder 16 als Bauelement, insbesondere als Dachelement wie ein Lichtband, eine Lichtkuppel, als Wandelement wie ein Paneel, als Bodenelement, in Gebäuden, in Fahrzeugen oder Lampen oder in Kombination mit eingelassenen Lampen als Leuchtelement, insbesondere in Paneel-Form.

Beispiele und Vergleichsbeispiele:

Die vorliegende Erfindung wird im Folgenden anhand von Beispielen weiter erörtert, ist jedoch nicht auf diese beschränkt:

Verwendete Komponenten:

Trimerisierungs-Katalysatoren

- Desmorapid® 30HB14 (36 Gew.-% Kaliumformiat,, 64 Gew.-% Ethylenglycol) Katalysatoren

- Dimethylzinnneodecanoat (Formrez UL-28)

Verwendete Polyole A):

- Ethylenglycol

Schaumstabilisatoren (Polyether-Polydimethylsiloxan-Copolymere):

- Tegostab® B8490

Verwendete Iso- und Polyisocyanate B)

- Desmodur® N3600: Isocyanuratgruppen-haltiges Polyisocyanat auf Basis von 1,6-Diisocyanatohexan (HDI) mit einem NCO-Gehalt von 23,2 Gew.-%, einer mittleren NCO-Funktionalität von 3,2 (nach GPC), einem Gehalt an monomerem HDI von maximal 0,2 Gew.-% und einer Viskosität von 1200 mPas (23 °C)

- Bayhydur® 3100: Hydrophiles Isocyanuratgruppen-haltiges Polyisocyanat auf Basis von 1,6-Diisocyanatohexan (HDI) mit einem NCO-Gehalt von 17,4 Gew.-%, einer mittleren NCO-Funktionalität von 3,2 (nach GPC), einem Gehalt an monomerem HDI von maximal 0,1 Gew.-% und einer Viskosität von 2800 mPas (23 °C)

- Desmodur HL: Isocyanuratgruppen-haltiges Polyisocyanat (37,5 Gew.-%) auf Basis von 1,6-Diisocyanatohexan (HDI) und 2,4-Toluendiisocyanat mit einem NCO-Gehalt von 24,4 Gew.-% (berechnet), gelöst in 62,5 Gew.-% Desmodur® N3600. Die Mischung hat eine Viskosität von ca. 53.000 mPas (23°C).

**Beispiele**

Beispiel 1

Eine Isocyanat-reaktive Zusammensetzung aus 1,30 g Ethylenglykol, 1,04 g Wasser, 1,20 g Schaumstabilisator Tegostab B8490, 2,40 g Katalysator Desmorapid® 30HB14 und 0,90 g Katalysator Formrez UL-28 wurde mit einem Isocyanatgemisch aus 38,21g Desmodur® HL gelöst in 63,64 g Desmodur® N3600, 11,30 g Bayhydur® 3100 für 15 Sekunden mit einem Speedmixer bei 3540 U/min quasi blasenfrei vermischt und vorsichtig in eine Form ausgegossen. Danach wurde die Form in einen Ofen bei 70°C gestellt. Der Schaum war nach 110 Sekunden abgebunden. Danach wurde der Schaum weitere 30 Minuten bei 70° im Ofen getempert.
Die berechnete Kennzahl ist 300.
Der Schaumstoff hatte eine Lichttransmission von 17,2 % (Dicke 20 mm).
Die Zellgröße betrug ca. 1,0 bis 3,0 mm.

Beispiel 2

Eine Isocyanat-reaktive Zusammensetzung aus 1,04 g Ethylenglykol, 0,84 g Wasser, 1,10 g Schaumstabilisator Tegostab B8490, 2,20 g Katalysator Desmorapid® 30HB14, 0,82 g Katalysator Formrez UL-28 und 10,0 g Triethylphosphat wurde mit einem Isocyanatgemisch aus 15,92g Desmodur® HL gelöst in 26,53 g Desmodur® N3600, 42,44 g weiteres Desmodur® N3600 9,42 g Bayhydur® 3100 für 15 Sekunden mit einem Speedmixer bei 3540 U/min quasi blasenfrei vermischt und vorsichtig in eine Form ausgegossen. Danach wurde die Form in einen Ofen bei 70°C gestellt. Der Schaum war nach 240 Sekunden abgebunden. Danach wurde der Schaum weitere 60 Minuten bei 70° im Ofen getempert.
Die berechnete Kennzahl ist 300.
Der Schaumstoff hatte eine Lichttransmission von 25,2 % (Dicke 20 mm).
Die Zellgröße betrug ca. 2,0 bis 4,0 mm.

Beispiel 3

Eine Isocyanat-reaktive Zusammensetzung aus 1,05 g Ethylenglykol, 0,85 g Wasser, 0,79 g Schaumstabilisator Tegostab B8490, 0,34 g Katalysator Desmorapid® 30HB14, 0,11 g Katalysator Formrez UL-28 und 9,73 g Triethylphosphat wurde mit einem Isocyanatgemisch aus 22,00g Desmodur® T100, 68,00 g Desmodur® N3600 und 10,00 g Bayhydur® 3100 für 15 Sekunden mit einem Speedmixer bei 3540 U/min quasi blasenfrei vermischt und vorsichtig in eine Form ausgegossen. Danach wurde die Form in einen Ofen bei 70°C gestellt. Der Schaum war nach 600 Sekunden abgebunden. Danach wurde der Schaum weitere 60 Minuten bei 70° im Ofen getempert.
Die berechnete Kennzahl ist 500.
Der Schaumstoff hatte eine Lichttransmission von 14,8% (Dicke 20 mm).
Die Zellgröße betrug ca. 2,0 bis 4,0 mm.

Vergleichsbeispiel 1

Eine Isocyanat-reaktive Zusammensetzung aus 1,30 g Ethylenglykol, 1,04 g Wasser, 1,20 g Schaumstabilisator Tegostab B8490, 2,40 g Katalysator Desmorapid® 30HB14 und 0,90 g Katalysator Formrez UL-28 wurde mit einem Isocyanatgemisch aus 38,21g Desmodur® HL gelöst in 63,64 g Desmodur® N3600, 11,30 g Bayhydur® 3100 mit einem Laborrührwerk der Fa. Pendraulik bei 3730 U/min für 15 Sekunden (weitgehend blasenfrei) vermischt und das Reaktionsgemisch vorsichtig in eine Form gegossen. Danach wurde die Form in einen Ofen bei 70°C gestellt. Der Schaum war nach 90 Sekunden abgebunden. Danach wurde der Schaum weitere 15 Minuten bei 70° im Ofen getempert.
Die berechnete Kennzahl ist 300.
Der Schaumstoff hatte eine Lichttransmission von 3,5 % (Dicke 20 mm).

Die Zellgröße betrug ca. 0,5 bis 1,5 mm.

Vergleichsbeispiel 2

Eine Isocyanat-reaktive Zusammensetzung aus 1,08 g Ethylenglykol, 0,87 g Wasser, 1,14 g Schaumstabilisator Tegostab B8490, 0,57 g Katalysator Desmorapid® 30HB14, 0,28 g Katalysator Formrez UL-28 und 10,0 g Triethylphosphat wurde mit einem Isocyanatgemisch aus 30,00g Desmodur® T100, 60,00 g Desmodur® N3600 und 10,00 g Bayhydur® 3100 mit einem Laborrührwerk der Fa. Pendraulik bei 3730 U/min für 15 Sekunden (weitgehend blasenfrei) vermischt und das Reaktionsgemisch vorsichtig in eine Form gegossen. Danach wurde die Form in einen Ofen bei 70°C gestellt. Der Schaum war nach 90 Sekunden abgebunden. Danach wurde der Schaum weitere 15 Minuten bei 70° im Ofen getempert.

Die berechnete Kennzahl ist 500.

Der Schaumstoff hatte eine Lichttransmission von 2,5 % (Dicke 20 mm).

Die Zellgröße ist < 1,5 mm.

Verwendete Messverfahren:

Die Wärmeleitzahlen wurden gemäß nach DIN 52616: 1977-11 an 30 mm dicken Schaumstoffen ermittelt.

Lichttransmission nach EN ISO 13468-2:2006 an 20 mm dicken Schaumstoffen gemessen, außer es wird explizit eine andere Dicke angegeben.

Zellgröße und Zellstegdicke wurden wie vorstehend beschrieben unter Verwendung eines Lichtmikroskops gemessen.

Der Yellowing Index, nachstehend auch lediglich als YI bezeichnet, wurde gemäß ASTM E 313:2015 bestimmt.

Der Haze wurde nach ASTM D1003-13 ermittelt.

**Patentansprüche**

1. Verfahren zur Herstellung von transluzenten Polyurethan- und Polyisocyanuratschaumstoffen durch Umsetzung einer Komponente A umfassend oder bestehend aus,

   A1 mindestens ein, mit der Komponente B reaktives, Polyol;
   A2 gegebenenfalls mindestens ein Amin;
   A3 Wasser und gegebenenfalls Ameisensäure;
   A4 mindestens einen Schaumstabilisator
   A5 gegebenenfalls Hilfs- und/oder Zusatzstoffe;
   A6 gegebenenfalls mindestens ein Flammschutzmittel;
   A7 mindestens einen Katalysator;
   und eine Komponente B, deren Gehalt an aromatischen Polyisocyanaten wenigstens 5 Gew.-% und höchstens 70 Gew.-% beträgt, umfassend,
   B1 mindestens eine aliphatische oder cycloaliphatische Polyisocyanatkomponente oder eine Kombination davon; und
   B2 gegebenenfalls mindestens ein hydrophiliertes Isocyanat; und
   B3 größer oder gleich 10 Gew.-Teile und bis zu 70 Gew.-Teile einer aromatischen Polyisocyanatkomponente, wobei die Gewichtsteile von B3 bezogen sind auf die Summe der Gewichtsteile von B1 bis B3, welche auf 100 Gew.-Teile normiert werden, **dadurch gekennzeichnet, dass**

   die Umsetzung der Komponente A mit der Komponente B bei einer Isocyanat-Kennzahl von wenigstens 200 durchgeführt wird
   wobei im Wesentlichen keine gasförmigen Nukleierungsmittel, eingetragen durch den Mischprozess, bei der Reaktion anwesend sind, und
   wobei die erhaltenen transluzenten Polyurethan- und Polyisocyanuratschaumstoffe eine Lichttransmission nach EN ISO 13468-2:2006 von mindestens 10% und einen Haze von mindestens 70%, bestimmt nach ASTM D1003-13, jeweils gemessen bei einer Schichtdicke von 20 mm, aufweisen.

2. Verfahren gemäß Anspruch 1, **dadurch gekennzeichnet, dass** der erhaltene transluzente Polyurethan- oder Polyisocyanuratschaumstoff eine Wärmeleitfähigkeit, gemessen gemäß DIN 52612:2-1984-06, von kleiner als 100 mW/(m*K) aufweist.

3. Verfahren gemäß einem der vorstehenden Ansprüche, **dadurch gekennzeichnet, dass** der erhaltene transluzente Polyurethan- oder Polyisocyanuratschaumstoff einen NCO-Modifizierungsgrad von mindestens 30 Mol% aufweisen.

4. Verfahren gemäß einem der vorstehenden Ansprüche, **dadurch gekennzeichnet, dass** der erhaltene transluzente Polyurethan- oder Polyisocyanuratschaumstoff farblos bis weiß ist und einen Yellowing Index, gemessen nach ASTM E 313:2015, von kleiner 30 aufweist, bezogen auf eine Schichtdicke des Schaumstoffs von 20 mm.

5. Verfahren gemäß einem der vorstehenden Ansprüche, **dadurch gekennzeichnet, dass** der erhaltene Polyurethan- oder Polyisocyanuratschaumstoff als ein zu mindestens 40% geschlossenzelliger Polyurethan- oder Polyisocyanuratschaumstoff vorliegt.

**6.** Verfahren gemäß einem der vorstehenden Ansprüche, **dadurch gekennzeichnet, dass** der erhaltene Polyurethan- oder Polyisocyanuratschaumstoff eine mittlere Zellgröße zwischen 1 mm und 20 mm aufweist, bestimmt unter Verwendung eines Lichtmikroskops; wobei der größte Abstand zwischen zwei Zellkanten als Zellgröße definiert wird.

**7.** Verfahren gemäß einem der vorstehenden Ansprüche, **dadurch gekennzeichnet, dass** der erhaltene Polyurethan- oder Polyisocyanuratschaumstoff eine Rohdichte des erhaltenen Schaums von höchstens 300 kg/m$^3$, bestimmt mittels DIN EN ISO 845:2009-10, aufweist.

**8.** Verfahren gemäß einem der vorstehenden Ansprüche, **dadurch gekennzeichnet, dass** der erhaltene Polyurethan- oder Polyisocyanuratschaumstoff eine mittlere Zellstegdicke von mindestens 0,05 mm aufweist, bestimmt unter Verwendung eines Lichtmikroskops; wobei die Dicke eines Zellsteges in der Mitte zwischen zwei Zwickeln als Zellstegdicke definiert wird.

**9.** Verfahren gemäß einem der vorstehenden Ansprüche, **dadurch gekennzeichnet, dass** die Komponente A

10 bis 99,3 Gew.-Teile von A1;
0 bis 10 Gew.-Teile von A2;
0,1 bis 80 Gew.-Teile von A3;
0 bis 50 Gew.-Teile von A5;
0 bis 80 Gew.-Teile von A6;

wobei die Summe von A1 bis A7 100 Gew.-Teile ergibt.

**10.** Verfahren gemäß einem der vorstehenden Ansprüche, **dadurch gekennzeichnet, dass**
0,5 bis 25 Gew.-Teile von A4;
0,1 bis 60 Gew.-Teile von A7 enthalten sind, bezogen auf 100 Gew.-Teile, die sich ergeben aus der Summe von A1 bis A7.

**11.** Das Verfahren gemäß einem der vorstehenden Ansprüche, **dadurch gekennzeichnet dass** die Polyisocyanatkomponente B in ihrer Gesamtheit einen Gehalt Urethangruppen von höchstens 5 Gew.-% bezogen auf ihr Gesamtgewicht aufweist.

**12.** Transluzenter Polyurethan- oder Polyisocyanuratschaumstoff, welcher durch ein Verfahren der vorstehenden Ansprüche erhalten wurde.

**13.** Mehrschichtverbundelement, in welchem der transluzente Polyurethan- oder Polyisocyanuratschaumstoff gemäß Anspruch 12 zwischen zwei Elementen vorliegt.

**14.** Mehrschichtverbundelement gemäß Anspruch 13, **dadurch gekennzeichnet, dass** die zwei Elemente transparente Folien oder Platten sind.

**15.** Verwendung des transluzenten Polyurethan- oder Polyisocyanuratschaumstoffs gemäß Anspruch 12 oder des Mehrschichtverbundelements gemäß Anspruch 13 oder 14 als Bauelement, als Wandelement, als Bodenelement, in Gebäuden, in Fahrzeugen oder Lampen oder in Kombination mit eingelassenen Lampen als Leuchtelement, insbesondere in Paneel-Form.

Europäisches
Patentamt

European
Patent Office

Office européen
des brevets

# EUROPÄISCHER RECHERCHENBERICHT

Nummer der Anmeldung

EP 18 19 8126

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | DE 10 2005 042235 A1 (BASF AG [DE]) 8. März 2007 (2007-03-08) * Absätze [0001], [0006], [0018] - [0024]; Beispiele 1-3 * ----- | 1-15 | INV. C08G18/72 C08J9/00 C08G18/32 |
| | | | RECHERCHIERTE SACHGEBIETE (IPC) |
| | | | C08G C08J |

Der vorliegende Recherchenbericht wurde für alle Patentansprüche erstellt

| Recherchenort | Abschlußdatum der Recherche | Prüfer |
|---|---|---|
| Den Haag | 6. März 2019 | Bezard, Stéphane |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 8126

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-03-2019

| Im Recherchenbericht angeführtes Patentdokument | Datum der Veröffentlichung | Mitglied(er) der Patentfamilie | Datum der Veröffentlichung |
|---|---|---|---|
| DE 102005042235 A1 | 08-03-2007 | DE 102005042235 A1<br>WO 2007057244 A1 | 08-03-2007<br>24-05-2007 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005042235 A1
- EP 0629607 A2
- EP 0010589 A1
- EP 0047452 A1
- US 3645979 A